# EUROPÄISCHE PATENTSCHRIFT

(11) **EP 1 193 167 B1**
(45) Veröffentlichungstag und Bekanntmachung des Hinweises auf die Patenterteilung: **14.06.2006**
(21) Anmeldenummer: 01116599.0
(22) Anmeldetag: 10.07.2001
(51) Int. Cl.: B62D 35/02

(54) **Kühlluftführung für Kraftfahrzeuge**
Cooling air guide for motor vehicles
Guidage de l'air de refroidissement pour véhicules automobiles

(30) Priorität: 30.09.2000 DE 10048531
(43) Veröffentlichungstag der Anmeldung: 03.04.2002
(73) Patentinhaber: Dr.Ing. h.c.F. Porsche Aktiengesellschaft, 70435 Stuttgart (DE)
(72) Erfinder: Preiss, Michael, 71665 Vaihingen (DE)

(56) Entgegenhaltungen:
- EP-A- 0 888 956
- US-A- 5 626 185
- PATENT ABSTRACTS OF JAPAN vol. 1998, no. 01, 30. Januar 1998 (1998-01-30) & JP 09 226388 A (NISSAN MOTOR CO LTD), 2. September 1997 (1997-09-02)

## Beschreibung

Die Erfindung betrifft eine Kühlluftführung für Kraftfahrzeuge nach dem Oberbegriff des Patentanspruches 1.

Aus der DE 37 04 145 C2 ist bereits eine Kühlluftführung für Kraftfahrzeuge bekannt geworden, bei der ein im Bugbereich des Kraftfahrzeuges angeordneter Kühler von einem Luftstrom durchströmt ist. Der aus dem Kühler austretende Luftstrom ist durch den Motorraum geleitet und vor einer Stirnwand durch Öffnungen nach unten aus dem Motorraum geführt. Stromab des Kühlers sind im Unterboden zusätzliche Eintrittsöffnungen für Kühlluft in den Motorraum vorgesehen. Der aus dem Kühler austretende erwärmte Luftstrom beaufschlagt somit den gesamten Motorraum; der Kühlluftaustritt erfolgt ungerichtet an der Unterseite des Kraftfahrzeuges.

Die DE 31 50 152 A1 zeigt ein Kraftfahrzeug, bei dem ein Luftstrom einen im Bugbereich des Kraftfahrzeuges angeordneten Kühler durchsetzt. Der Luftstrom wird vor der Brennkraftmaschine aus dem Motorraum durch eine im Unterboden angeordnete Austrittsöffnung ausgeleitet. Ein am Unterboden des Kraftfahrzeuges schwenkbar gelagerter Spoiler ist so angeordnet, dass er in einer seiner Endpositionen die Austrittsöffnung verschließt. Der Spoiler ist durch eine Antriebseinrichtung abhängig von der Kühlmitteltemperatur und der Fahrgeschwindigkeit bewegbar.

Die JP 09-226 388 A offenbart eine Kühlvorrichtung für einen Motorraum eines Kraftfahrzeuges, bei der ein aus dem Kühler austretender Abluftstrom durch am Unterboden angeordnete Auslassöffnungen unter das Fahrzeug geleitet und durch ein in der Öffnung angeordnetes Luftleitelement im wesentlichen parallel zum Unterboden ausgerichtet wird.

Gegenüber dem Stand betztgenannten der Technik ist es Aufgabe der Erfindung, eine Kühlluftführung für Kraftfahrzeuge zu schaffen, die einfach aufgebaut ist und gleichzeitig für eine günstige Führung der Kühlluft sorgt.

Diese Aufgabe wird erfindungsgemäß mit den Merkmalen des Patentanspruches 1 gelöst. Erfindungsgemäß wird vorgeschlagen, bei einem Kraftfahrzeug, dessen Austrittsöffnung für Kühlluft von einem Luftleitelement abdeckbar sind, das Luftleitelement so anzuordnen, dass der aus dem Luftleitelement abströmende Abluftstrom im wesentlichen parallel zu einem den Bugbereich umströmenden Luftstrom ausgerichtet ist.

In vorteilhafter Weiterbildung der Erfindung kann es ferner vorgesehen sein, dass das Luftleitelement aus einer Leitfläche und Seitenelementen besteht, wobei die Seitenelemente aus einem elastischen Werkstoff bestehen und die Leitfläche bewegbar am Unterboden des Kraftfahrzeuges befestigt ist.

Die Erfindung ist nachstehend an Hand des in den Figuren dargestellten Ausführungsbeispieles näher dargestellt.

Es zeigen:
- Fig. 1: eine Seitenansicht eines Bugbereiches eines Kraftfahrzeuges mit einem Luftleitelement,
- Fig. 2: eine Frontalansicht zu Fig. 1,
- Fig. 3: eine skizzenhafte Darstellung der Strömungen am Luftleitelement,
- Fig. 4: eine Seitenansicht des Luftleitelementes,
- Fig. 5: einen Schnitt nach der Linie V-V der Fig. 3,

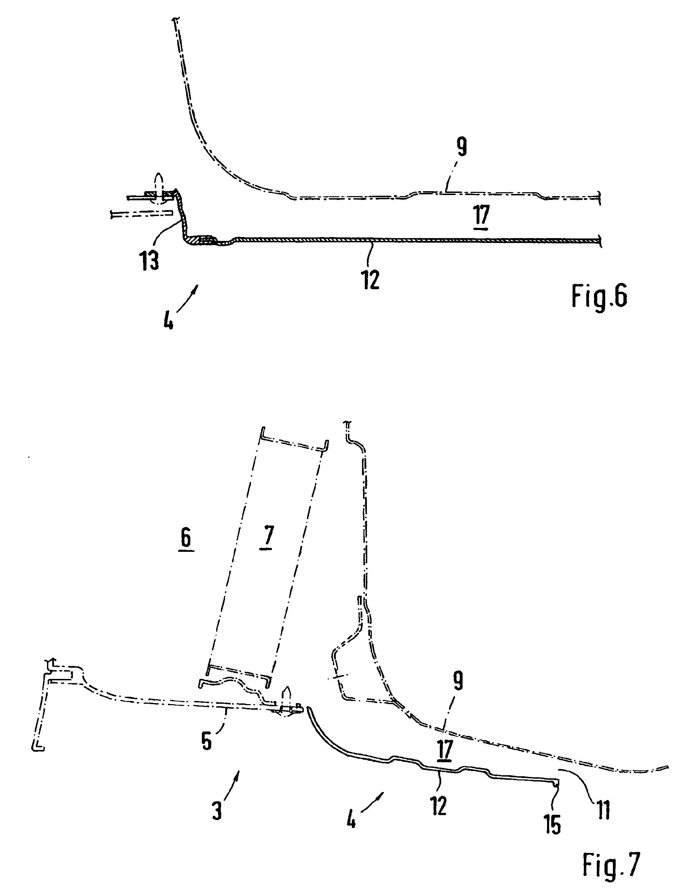

- Fig. 6: einen Schnitt nach der Linie VI-VI der Fig. 3 und
- Fig. 7: einen Schnitt nach der Linie VII-VII der Fig. 3.

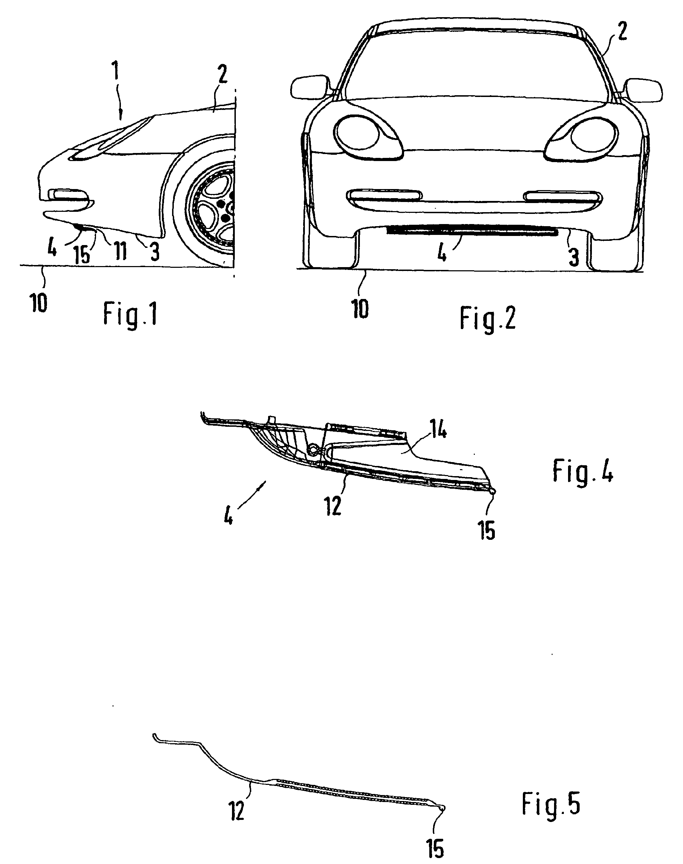

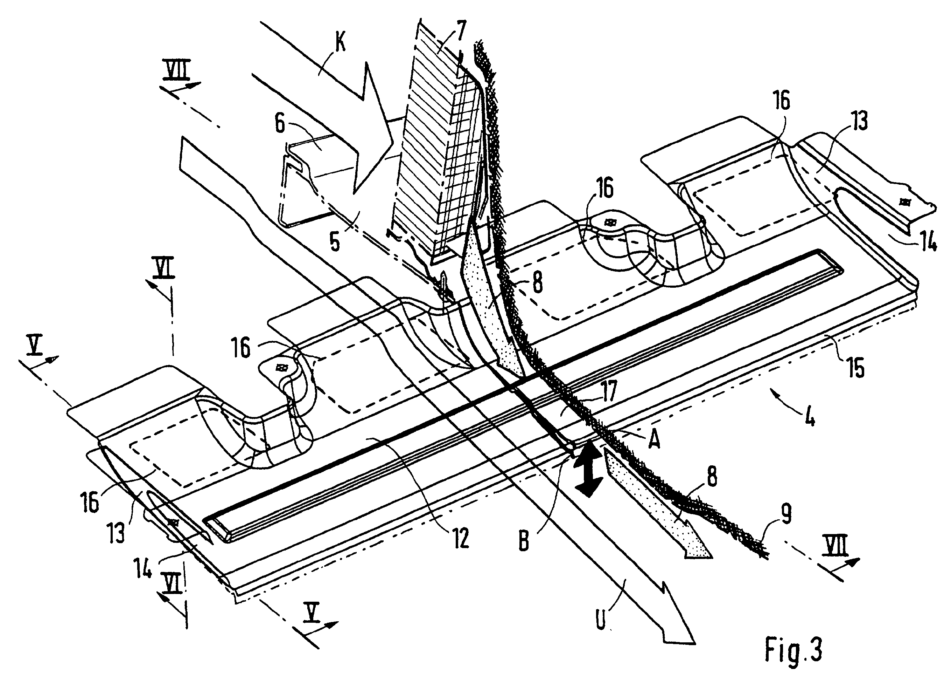

An dem in Fig. 1 und Fig. 2 gezeigten Bugbereich 1 eines Kraftfahrzeuges 2 ist im Bereich des Unterbodens 3 ein Luftleitelement 4 mittig des Kraftfahrzeuges 2 angeordnet.

Fig. 3 zeigt die Einbausituation des Luftleitelementes 4. Das Luftleitelement 4 ist an einem Bodenblech 5 des Kraftfahrzeuges 2 gehalten, das den vorderen Bereich des Unterbodens 3 bildet. Am Bodenblech 5 sind Auslassöffnungen 16 für Kühlluft vorgesehen. In einem vom Bodenblech 5 nach unten begrenzten Kühlluftkanal 6 wird ein Kühlluftstrom K durch einen Kühler 7 geführt. Der aus dem Kühler 7 austretende, erwärmte Abluftstrom 8 wird von einem zweiten Bodenblech 9 nach unten abgelenkt, wobei das zweite Bodenblech 9 im Bereich des Kühlers 7 bis zu dessen Oberkante nach oben gezogen ist und so eine obere Begrenzung eines Kanals 17 für den Abluftstrom 8 bildet.

Zwischen dem Unterboden 3 des Kraftfahrzeuges 2 und einer Fahrbahn 10 (vgl. Fig. 1) bildet sich während der Fahrt des Kraftfahrzeuges 2 eine Unterströmung U aus, die im wesentlichen parallel zur Fahrbahn 10 verläuft. Eine Austrittsöffnung 11 des Luftleitelementes 4 ist zwischen dem zweiten Bodenblech 9 und einer Kante 15 des Luftleitelementes 4 gebildet. Das Luftleitelement 4 führt den Kühlluftstrom 8 so, dass er aus der Austrittsöffnung 11 im wesentlichen parallel zur Unterströmung U austritt.

Das Luftleitelement 4 besteht aus einer Leitfläche 12 und Seitenelementen 13. Die Leitfläche 12 ist in ihrem vorderen Bereich, der an einem Ende am Bodenblech 5 befestigt ist, gewölbt ausgeführt und geht dann in einen plattenförmigen Bereich über, der an der Kante 15 endet. Die Seitenelement 13 decken den quer zum Kühlluftstrom 8 gebildeten Spalt zwischen den Bodenblech 5 und der Leitfläche 12 ab. Die Leitfläche 12 ist formsteif ausgeführt, wobei aufgrund der Dicke eine elastische Durchbiegung der Leitfläche 12 quer zur Strömungsrichtung des Kühlluftstromes 8, d.h. senkrecht zur Unterströmung U, möglich ist. Die Seitenelemente 13 sind aus einem elastischen Werkstoff gefertigt und verformbar. In den Seitenelementen 13 vorgesehene Schlitze 14 (vgl. Fig. 4) unterstützen die Verformbarkeit der Seitenelemente 13 zusätzlich. Insgesamt ist die Leitfläche 12 damit bewegbar am Unterboden 3 des Kraftfahrzeuges 2 gehalten.

Die Kante 15 der Leitfläche 12 befindet sich im Stillstand des Kraftfahrzeuges in der mit A bezeichneten Ruheposition. Ihr Abstand zur Fahrbahn 10 ist dabei so bemessen, dass der Bugbereich 1 des Kraftfahrzeuges 2 beim normalen Rangieren auch an Böschungen nicht aufsetzt. Bei hohen Fahrgeschwindigkeiten hingegen wird durch die Unterströmung U im Bereich des Unterbodens 3 ein Unterdruck erzeugt, der auf die Leitfläche 12 wirkt und diese nach unten bewegt. Dadurch nimmt die Kante 15 ihre zweite Position B ein. Dies wird einerseits durch die Dehnung der weich ausgeführten Seitenelemente 13 und andererseits durch die Durchbiegung der Leitfläche 12 in Richtung der Unterströmung U erreicht. In der Position B ist die Austrittsöffnung 11 vergrößert, so dass ein größerer Kühlluftstrom 8 möglich ist. Der in der Position B verminderte Abstand der Kante 15 zur Fahrbahn ist unproblematisch, da davon auszugehen ist, dass hohe Fahrgeschwindigkeiten auf ebenen Fahrbahnen 10 gefahren werden.

## Patentansprüche

1. Kühlluftführung für Kraftfahrzeuge mit einem in einem Bugbereich (1) eines Kraftfahrzeuges (2) angeordneten Kühler (7), der von einem Kühlluftstrom (K) durchströmt ist, wobei der aus dem Kühler austretende Abluftstrom (8) durch an einem Unterboden (3) angeordnete Auslassöffnungen (16) unter das Kraftfahrzeug geleitet ist und die Auslassöffnungen durch ein Luftleitelement (4) abdeckbar sind, das den Abluftstrom (8) so umlenkt, dass der Abluftstrom im wesentlichen parallel zu einem am Unterboden (3) vorbeiströmenden Luftstrom (U) ausgerichtet ist, **dadurch gekennzeichnet, dass** das Luftleitelement (4) aus einer Leitfläche (12) und Seitenelementen (13) besteht, wobei die Seitenelemente aus einem elastischen Werkstoff bestehen und die Leitfläche bewegbar am Unterboden (3) des Kraftfahrzeuges (2) befestigt ist.

2. Kühlluftführung nach Anspruch 1, **dadurch gekennzeichnet, dass** die Seitenelemente (13) Schlitze (14) aufweisen.

## Claims

1. A cooling-air guiding system for motor vehicles, comprising a radiator (7) which is arranged in a front region (1) of a motor vehicle (2) and through which a cooling-air flow (K) passes, wherein the exhaust-air flow (8) issuing from the radiator is guided under the motor vehicle through outlet openings (16) arranged in an underbody (3), and the outlet openings can be covered by an air deflector (4) which deflects the exhaust-air flow (8) so that it is aligned substantially parallel with an air flow (U) flowing past the underbody (3), **characterised in that** the air deflector (4) comprises a deflection surface (12) and side members (13), wherein the side members (13) comprise a resilient material and the deflection surface is movably fixed to the underbody (3) of the motor vehicle (2).

2. A cooling-air guiding system according to claim 1, **characterised in that** the side members (13) have slots (14).

## Revendications

1. Circuit d'air de refroidissement pour véhicule automobile comportant un radiateur (7) disposé dans la zone avant (1) d'un véhicule automobile (2), lequel est traversé par un courant d'air de refroidissement (K), le courant d'air d'échappement (8) sortant du radiateur est guidé sous le véhicule automobile, par des orifices de sortie (16) disposés sur un dessous de caisse (3), **caractérisé en ce que** l'élément de guidage d'air (4) est constitué d'un déflecteur (12) et d'éléments latéraux (13), les éléments latéraux étant constitués d'un matériau élastique et le déflecteur étant fixé déplaçable sur le dessous de caisse (3) du véhicule automobile (2).

2. Circuit d'air de refroidissement selon la revendication 1, **caractérisé en ce que** les éléments latéraux (13) présentent des fentes (14).
